(19) Europäisches Patentamt
European Patent Office
Office européen des brevets

(11) **EP 3 695 233 B1**

(12) **EUROPÄISCHE PATENTSCHRIFT**

(45) Veröffentlichungstag und Bekanntmachung des Hinweises auf die Patenterteilung:
**16.04.2025 Patentblatt 2025/16**

(21) Anmeldenummer: **18789348.2**

(22) Anmeldetag: **11.10.2018**

(51) Internationale Patentklassifikation (IPC):
**G01P 5/02** (2006.01)     **G01P 5/00** (2006.01)
**B60W 40/10** (2012.01)

(52) Gemeinsame Patentklassifikation (CPC):
**G01P 5/02; B60W 40/1005; G01P 5/00**

(86) Internationale Anmeldenummer:
**PCT/EP2018/077802**

(87) Internationale Veröffentlichungsnummer:
**WO 2019/073007 (18.04.2019 Gazette 2019/16)**

(54) **VERFAHREN UND SYSTEM ZUR ERMITTLUNG VON EFFEKTIVEN WINDGESCHWINDIGKEITEN FÜR KRAFTFAHRZEUGE**

METHOD AND SYSTEM FOR DETERMINING EFFECTIVE WIND SPEEDS FOR MOTOR VEHICLES

PROCÉDÉ ET SYSTÈME PERMETTANT DE DÉTERMINER DES VITESSES DE VENT EFFECTIVES POUR DES VÉHICULES À MOTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.10.2017 DE 102017218218**

(43) Veröffentlichungstag der Anmeldung:
**19.08.2020 Patentblatt 2020/34**

(73) Patentinhaber: **Vitesco Technologies GmbH**
**93055 Regensburg (DE)**

(72) Erfinder: **GRUBWINKLER, Stefan**
**818737 München (DE)**

(74) Vertreter: **Vitesco Technologies**
**Landsberger Straße 187 - Haus D**
**80687 München (DE)**

(56) Entgegenhaltungen:
WO-A1-2014/037986     FR-A1- 2 909 058
FR-B1- 2 909 058     US-A1- 2011 071 710
US-A1- 2013 319 096

**Beschreibung**

Die Erfindung betrifft ein Verfahren zur Prognose von Windgeschwindigkeiten für Kraftfahrzeuge. Elektrofahrzeuge (EVs) haben eine begrenzte Reichweite, so dass eine Energieverbrauchsschätzung bzw. eine Reichweitenprognose für den Fahrer sehr wichtig ist. Für eine genaue Reichweitenprognose ist die Kenntnis aller auf den Energieverbrauch relevanten Einflussfaktoren notwendig. Die Windgeschwindigkeit hat aufgrund des aerodynamischen Widerstands einen Einfluss auf den Antriebsenergiebedarf und muss insbesondere bei Überlandstrecken berücksichtigt werden.

Literaturquellen geben den Einfluss der Windgeschwindigkeit mit bis zu 16,4% an (Quelle: Viehl, A., Cakar E., Engler M., Köhler. S: Wetterdaten in der Reichweitenprognose für Elektrofahrzeuge, ATZ 05/2016, S. 28-34) . Für die Energieverbrauchsprognose werden detaillierte und aktuelle Daten von Wetterdiensten mit einer hohen Auflösung benötigt (z.B. Windgeschwindigkeit alle 5km) benötigt. Die Wetterdaten (Windgeschwindigkeit und -richtung) werden den Fahrzeugen durch eine Backend-Anbindung zur Verfügung gestellt. Anhand der Fahrtrichtung des Fahrzeugs wird die auf die Anströmfläche des Fahrzeugs wirkende Windgeschwindigkeit ermittelt.

Die auf das Elektrofahrzeug wirkende Windgeschwindigkeit kann nur unzureichend aus genauen Wetterdaten bestimmt werden. Wetterdaten liefern für ein bestimmtes Gebiet die durchschnittliche Windgeschwindigkeit und -richtung, die vor allem für ebene Gebiete eine gute Prognose bieten. Durch die Topografie (Täler, Berge) verändert sich die Windgeschwindigkeit und -richtung erheblich. Mikroklimatische Effekte (z.B. Verdunstung) haben ebenfalls einen Einfluss auf die Windgeschwindigkeit und sind nur schwer zu prognostizieren. Zudem hat die Bebauung und Bepflanzung (z.B. Wälder) entlang der Strecke einen erheblichen Einfluss auf die auf das Fahrzeug wirkende effektive Windgeschwindigkeit. Außerdem werden Straßen aufgrund von Lärmschutzgründen oft beidseitig mit Wällen versehen, so dass die Prognosen von Wetterdiensten für die Verhältnisse auf der Straße nicht zutreffend sind.

Aus der DE 102012001649 A1 ist ein Verfahren und eine Vorrichtung zur Ermittlung der Geschwindigkeit des auf ein Kraftfahrzeug wirkenden Seitenwinds durch fahrzeuginterne Sensorik bekannt. Die DE 102014211273 A1 offenbart ein Fahrzeugmassenschätzverfahren.

Die US 2013/319096 A1 offenbart ein Verfahren zum Bestimmen einer Geschwindigkeit eines auf ein Fahrzeug zuströmenden Fahrtwindes basierend auf einem Kühlmittelmassestrom. Aus der WO 2014/037986 A1 ist die Bestimmung eines Luftwiderstandes aus der Differenz einer Antriebskraft und Fahrwiderständen bekannt.

Vor diesem Hintergrund soll die Prognose der auf die Fahrzeuge wirkenden effektiven Windgeschwindigkeit verbessert werden.

Die Aufgabe wird gelöst durch ein Verfahren gemäß den unabhängigen Ansprüchen. Vorteilhafte Weiterbildungen sind in den abhängigen Ansprüchen angegeben. Die Erfindung betrifft ein Verfahren zur Prognose von Windgeschwindigkeiten mit den Schritten:

- Ermittlung einer effektiven Windgeschwindigkeit, der jeweils ein Kraftfahrzeug während einer Fahrt ausgesetzt ist, anhand einer wirkenden Antriebsleistung, die während der Fahrt ermittelt wird, für eine Mehrzahl von Fahrzeugen;
- Übertragen der jeweils ermittelten, effektiven Windgeschwindigkeit (W) über eine drahtlose Kommunikationsverbindung (41) aus der Mehrzahl von Fahrzeugen an ein Backend (40),
- Sammeln von Daten zu den effektiven Windgeschwindigkeiten, welche anhand von von der Mehrzahl von Fahrzeugen erfassten Antriebsleistungen ermittelt wurden, im Backend und Speichern dieser in einer Datenbank, und
- Auswerten der gespeicherten Daten zu den effektiven Windgeschwindigkeiten, welche anhand von von einer Mehrzahl von Fahrzeugen erfassten Antriebsleistungen ermittelt wurden, mit Hilfe von statistischen Methoden und/oder mit Verfahren der künstlichen Intelligenz, wobei das Auswerten der gesammelten Daten zu Windgeschwindigkeiten eine Prognose zukünftiger Windgeschwindigkeiten umfasst.

Die Erfindung umfasst ferner ein entsprechendes Verfahren zur Prognose von Windgeschwindigkeiten in einem Backend, wobei aus einer Mehrzahl von Fahrzeugen über eine drahtlose Kommunikationsverbindung übertragene Daten zu effektiven Windgeschwindigkeiten in einem Backend empfangen werden, dort gesammelt und in einer Datenbank gespeichert werden; wobei die effektiven Windgeschwindigkeiten jeweils anhand einer während der Fahrt ermittelten, wirkenden Antriebsleistung des Fahrzeugs ermittelt werden. Die Auswertung erfolgt entsprechend dem oben beschriebenen Verfahren.

Das Verfahren ist bevorzugt bei Elektrofahrzeugen, d.h. bei Fahrzeugen, die einen elektrischen Antriebsmotor aufweisen, einsetzbar. Bei Elektrofahrzeugen kann die wirkende mechanische Antriebsleistung $P_m$ durch Messung von Strom und Spannung am Elektromotor genau bestimmt werden, falls das Wirkungsgradkennfeld des Elektromotors und die Verluste im Antriebsstrang des Kraftfahrzeugs (z.B. im Getriebe, ...) bekannt sind. Dies ist bei Fahrzeugen in Serienfertigung in der Regel gegeben.

Da der Antriebsstrang mit einem elektrischen Antriebsmotor üblicherweise auch nicht durch ein Mehrganggetriebe unterbrochen werden muss, ergibt sich der weitere Vorteil, dass die Antriebsleistung des Elektromotors im Allgemeinen kontinuierlich bestimmbar ist und durch fahrzeuginterne Sensoren und Steuereinrichtungen während der Fahrt ständig erfasst werden kann.

Generell entspricht die wirkende mechanische Antriebsleistung $P_m$ der notwendigen Leistung zur Überwindung der Fahrwiderstände:

$$P_m = (F_a + F_l + F_{st} + F_r) * v$$

Zu den Fahrwiderständen zählen der Beschleunigungswiderstand $F_a$ (von Fahrzeugmasse, Massenzuschlagsfaktor und Beschleunigung abhängig), der Steigungswiderstand $F_{st}$ (von Fahrzeugmasse und Steigung der Straße abhängig) und der Rollwiderstand $F_r$ (von Fahrzeugmasse und Rollwiderstandsbeiwert abhängig) sowie der Luftwiderstand

$$F_l = \frac{1}{2} * \rho * c_w * A * (v - W)^2.$$

Der Luftwiderstand $F_l$ ist vom Fahrzeugkennwert $c_w * A$, der Fahrzeuggeschwindigkeit v und der effektiven Windgeschwindigkeit $W$ abhängig. A ist die effektive Fahrzeugquerschnittsfläche (senkrecht zur Fahrtrichtung). $\rho$ ist die Luftdichte.

In einer bevorzugten Ausführungsvariante des erfindungsgemäßen Verfahrens wird daher die effektiv auf das Fahrzeug wirkende Windgeschwindigkeit $W$ aus dem wirkenden Luftwiderstand $F_l$ berechnet. Der Luftwiderstand wird seinerseits berechnet, indem aus der wirkenden Antriebsleistung $P_m$ bekannte und/oder geschätzte Fahrwiderstände abgezogen werden.

Die effektive, auf das Fahrzeug wirkende Windgeschwindigkeit $W$, die mit dem oben beschriebenen Verfahren ermittelt werden kann, bezieht sich hierbei insbesondere auf die in Fahrtrichtung oder schwindigkeit. Windkomponenten quer (d.h. senkrecht) zur Fahrtrichtung, sogenannter Seitenwind, werden damit nicht erfasst.

Bekannte Fahrwiderstände sind die oben genannten Fahrwiderstände, deren Eingangsgrößen fix und bekannt oder messbar sind. Einige der genannten Eingangsgrößen sind veränderlich und können nicht einfach gemessen werden, wie z.B. die Fahrzeugmasse, die sich je nach Zuladung und Anzahl beförderter Personen verändert. Alle nicht messbaren Fahrzeugparameter können mit an sich bekannten Verfahren geschätzt werden. Dazu kann die Fahrzeugmasse über einen bekannten Masseschätzer, der Rollwiderstandsbeiwert und der Fahrzeugkennwert (ändert sich bspw. bei offenen Fenstern oder bei Dachgepäck) geschätzt werden.

Als Schätzverfahren für die einzelnen Parameter eigenen sich beispielsweise Filterverfahren z.B. Kalman-Filter, und Least-Square-Schätzverfahren. Als Eingangsgrößen für die Schätzverfahren werden die gemessenen fahrdynamischen Größen (Geschwindigkeit, Beschleunigung), die Fahrzeugparameter sowie Schätzwerte zu vergangenen Zeitpunkten verwendet. Aus den geschätzten Fahrzeugparametern können dann die entsprechenden Fahrwiderstände geschätzt werden. Die Schätzverfahren liefern auch eine Aussage zur Güte des geschätzten Wertes.

Zur Berechnung des Luftwiderstandes werden somit vorzugsweise Daten aus fahrzeuginterner Sensorik, Umfeldsensorik des Fahrzeuges, Positionsdaten des Fahrzeuges, Daten von digitalen Karten, Infrastrukturdaten, von anderen Fahrzeugen empfangene Daten und/oder aus einem Backend empfangene Daten verwendet.

Falls genaue Steigungsdaten vorliegen, beispielsweise anhand digitaler Karten zusammen mit Positionsdaten des Fahrzeuges, sind alle Eingangsparameter für die Fahrwiderstände mit Ausnahme der Windgeschwindigkeit bekannt. Dadurch kann die Windgeschwindigkeit berechnet bzw. geschätzt werden. Dazu eignet sich ebenfalls ein geeigneter Filteransatz (2. B, Kalman-Filter oder Least-Square-Schätzer).

Die anderen Schätzgrößen (Masse, Rollwiderstandsbeiwert und Fahrzeugkennwert) ändern sich nicht so dynamisch wie die Windgeschwindigkeit, so dass die Anpassgeschwindigkeit des Schätzers für die Windgeschwindigkeit schneller ist als die der anderen Filter. Die einzelnen Filter können untereinander kombiniert werden, so dass beispielsweise bei Veränderungen des geschätzten Massewertes die Güte der ermittelten Windgeschwindigkeit herabgesetzt und evtl. als nicht valide gekennzeichnet wird.

Gemäß einer vorteilhaften Variante des erfindungsgemäßen Verfahrens wird daher anhand der verwendeten Daten zusätzlich eine Güte des ermittelten Luftwiderstands bzw. der ermittelten effektiven Windgeschwindigkeit bestimmt. Die Güte gibt dabei an, wie verlässlich der ermittelte Wert ist.

Gemäß einer weiter bevorzugten Ausführungsvariante werden mittels Umfeldsensorik, fahrzeuginterner Sensorik und/oder Fahrzeug-zu-Fahrzeug Kommunikation Überholvorgänge und /oder dem Kraftfahrzeug vorausfahrende Fahrzeuge erkannt.

Beispielsweise kann mit Hilfe von Radarsensoren ermittelt werden, ob das Fahrzeug hinter einem anderen Fahrzeug, insbesondere hinter einem LkW fährt. Auch Überholvorgänge können mit fahrzeuginternen Sensoren ermittelt werden. Bestimmte Lenkbewegungen, Blinkersetzen und Beschleunigungswerte können beispielsweise auf einen Überholvorgang hinweisen. Die Güte der ermittelten Windgeschwindigkeit während Überholvorgängen sowie bei Folgefahrten hinter LkWs wird vorzugsweise herabgesetzt, da die ermittelten Werte zur effektive Windgeschwindigkeit in diesen Fahrsituationen nur bedingt verwertbar sind.

Mit dem erfindungsgemäßen Verfahren wird die auf ein Kraftfahrzeug wirkende effektive Windgeschwindigkeit (auf der Straße) vorzugsweise ortsbasiert ermittelt. Das heißt, mit dem erfindungsgemäßen Verfahren wird die effektive Windgeschwindigkeit an einem bestimmten Ort ermittelt. Da das Verfahren vorzugsweise kontinuierlich während der Fahrt ausgeführt wird, kann die Windgeschwindigkeit, und deren Veränderungen entlang einer gefahrenen Strecke ermittelt werden. Dabei wird derjenige Einfluss der Windgeschwindigkeit ermittelt, der für die Energieverbrauchsprognose relevant ist. Die effektive Windgeschwindigkeit betrifft also die jeweilige Windkomponente in Fahrtrichtung oder entgegen der Fahrtrichtung. Eine gesonderte Auswertung der Windrichtung ist nicht zwingend notwendig, da die effektive Windgeschwindigkeit georeferenziert für einen bestimmten Straßenabschnitt gilt.

Seitenwinde, d.h. Windkomponenten senkrecht zur Fahrtrichtung des Fahrzeuges können vorzugsweise zusätzlich über entsprechende Sensoren, z.B. Ultraschallsensoren am Fahrzeug erfasst werden. Auch Lenksignale, z.B. eines Lenkwinkelsensors können zur Detektion von Seitenwinden eingesetzt werden, wenn beispielsweise starker Seitenwind ein ständiges Gegenlenken erforderlich macht.

Die eigentliche Berechnung der effektiven Windgeschwindigkeit W kann durch eine Recheneinheit im Fahrzeug anhand der im Fahrzeug ermittelten, geschätzten bzw. empfangenen Daten erfolgen. Vorteilhafterweise werden die im Fahrzeug gemäß dem erfindungsgemäßen Verfahren ermittelten effektiven Windgeschwindigkeiten über eine drahtlose Kommunikationsverbindung aus dem Fahrzeug an ein Backend übertragen. Vorzugsweise werden dabei zusätzlich die Ortspositionen des Fahrzeuges und/oder eine Güte und/oder einer Zeitinformation an das Backend übertragen. D.h. die ermittelten effektiven Windgeschwindigkeiten werden georeferenziert und mit Zeitstempel an das Backend gesendet. Das Backend kann dabei beispielsweise durch einen zentralen Server gebildet sein, aber auch durch eine Cloud.

Gemäß einer alternativen Variante werden aus dem Fahrzeug lediglich die zur Berechnung der effektiven Windgeschwindigkeiten erforderlichen spezifischen Fahrzeugdaten (Sensordaten, Antriebsleistung, Geoposition) an das Backend gesendet. Die eigentliche Berechnung der effektiven Windgeschwindigkeit kann dann ebenso durch eine Recheneinheit im Backend erfolgen. Auch die ggf. erforderlichen Schätzverfahren können im Backend ausgeführt werden.

Erfindungsgemäß werden Daten zu Windgeschwindigkeiten, welche unter Berücksichtigung von von einer Mehrzahl von Fahrzeugen während der Fahrt gesammelten Antriebsleistungen ermittelt wurden, in einer Datenbank gesammelt und gespeichert. Die Daten zu Windgeschwindigkeiten entsprechen erfindungsgemäß den gemäß dem oben beschriebenen Verfahren berechneten effektiven Windgeschwindigkeiten. Zusätzlich können aber auch durch geeignete Sensoren am Fahrzeug erfasste Daten zu Seitenwinden gesammelt und gespeichert werden. Ebenso wie eine ermittelte effektive Windgeschwindigkeit kann dafür eine erfasste Seitenwindgeschwindigkeit mit Geoposition und Zeitstempel aus dem Fahrzeug an das Backend gesendet werden.

Im Backend werden die gesammelten Werte zu Windgeschwindigkeiten, welche anhand von den von einer Mehrzahl von Fahrzeugen erfassten Antriebsleistungen ermittelt wurden, mit Hilfe von statistischen Methoden und Verfahren der künstlichen Intelligenz ausgewertet. Die effektiven Windgeschwindigkeiten werden hierbei vorzugsweise getrennt nach Fahrtrichtung behandelt.

Für die effektive Windgeschwindigkeit und Seitenwindgeschwindigkeit können damit vorzugsweise Durchschnittswerte oder ein wahrscheinlichster Wert für eine effektive Windgeschwindigkeit an einem bestimmten Ort ermittelt werden. Diese Durchschnittswerte oder wahrscheinlichsten Werte können zusätzlich mit Hilfe von Daten von Wetterdiensten plausibilisiert werden. Neben den Durchschnittswerten und wahrscheinlichsten Werten können insbesondere auch Stellen mit starkem Wind, insbesondere mit erhöhtem Seitenwindaufkommen identifiziert werden.

Darüber hinaus kann die Auswertung der Windgeschwindigkeiten auch eine Grundlage für eine Prognose von zukünftigen Windgeschwindigkeiten sein.

Ein weiteres Beispiel, das nicht in den Schutzumfang der beigefügten Ansprüche fällt, ist eine Datenbank mit Daten zu Windgeschwindigkeiten, die mit einer Variante des erfindungsgemäßen Verfahrens ermittelt, gesammelt, und/oder ausgewertet wurden. Die Datenbank ist vorzugsweise im Backend ausgeführt und enthält bevorzugt georeferenzierte Werte zu Windgeschwindigkeiten.

Neben den gesammelten und gespeicherten Werten zu Windgeschwindigkeiten kann die Datenbank insbesondere auch durch Auswertung aufgrund von Daten von mehreren vernetzten Fahrzeugen erhaltene Durchschnittswerte oder wahrscheinlichste Werte für Windgeschwindigkeiten an einem bestimmten Ort enthalten. Vorzugsweise sind es Werte für die effektive Windgeschwindigkeit (in Fahrtrichtung bzw. entgegengesetzt), welche anhand der Antriebsleitung von Fahrzeugen ermittelt wurden. Zusätzlich oder alternativ können aber auch georeferenzierte Werte für Seitenwindaufkommen in der Datenbank gesammelt sein.

Die Datenbank kann auch in Form einer digitalen Karte ausgeführt sein, wobei die gesammelten und/oder ausgewerteten Werte für Windgeschwindigkeiten georeferenziert den Ortspositionen in einem Straßennetz zugeordnet sind. Auf solch eine digitale Karte können beispielsweise Navigationsgeräte in Fahrzeugen über drahtlose Kommunikation zugreifen.

Entsprechend können die in der Datenbank bzw. in der digitalen Karte gespeicherten Informationen vernetzten Fahrzeugen über eine drahtlose Kommunikationsverbindung für verschiedene Dienste, beispielsweise zur Reichweitenschätzung und Energieverbrauchsprognose von Elektrofahrzeugen zur Verfügung gestellt werden.

In der Datenbank bzw. der digitalen Karte gespeicherte Informationen zu Seitenwindaufkommen (insbesondere an Stellen mit erhöhtem Seitenwindaufkommen) können vorteilhaft allen vernetzten Fahrzeugen (auch konventionellen, verbrennungsmotorisch betriebenen Fahrzeugen) zur Verfügung gestellt werden, um beispielsweise Warnungen an den Fahrer auszugeben oder für die Parametrisierung eines Spurhalteassistenzsystems oder zur Berücksichtigung bei der Spurplanung von autonomen oder teilautonomen Fahrzeugen.

Ein System zur Ermittlung von Windgeschwindigkeiten, welcher ein Kraftfahrzeug während einer Fahrt ausgesetzt ist, umfasst beispielsweise

- eine Sensoranordnung zur Erfassung von Umfelddaten Fahrzeugdaten, und/oder Seitenwindaufkommen;
- eine Kommunikationseinrichtung zum Empfangen von Positionsdaten, Infrastrukturdaten, Daten aus einer digitalen Karte und/oder von anderen Fahrzeugen oder aus einem Backend übertragenen Daten;
- eine Kommunikationseinrichtung zum Übertragen von im Fahrzeug berechneten Windgeschwindigkeiten oder im Kraftfahrzeug erfassten Daten zur Berechnung einer Windgeschwindigkeit an ein Backend; sowie
- eine Recheneinheit zur Berechnung einer effektiven Windgeschwindigkeit anhand der im Kraftfahrzeug erfassten und/oder empfangenen Daten, wobei die Recheneinheit in dem Kraftfahrzeug oder in dem Backend angeordnet sein kann.

Das System zur Ermittlung von Windgeschwindigkeiten, welcher ein Kraftfahrzeug während einer Fahrt ausgesetzt ist, ist vorzugsweise eingerichtet, das erfindungsgemäße Verfahren zur Ermittlung einer effektiven Windgeschwindigkeit durchzuführen.

Durch die Erfindung wird die Bestimmung der effektiv auf die Fahrzeuge wirkenden Windgeschwindigkeit unabhängig von den Durchschnittswerten der Wetterprognosen ermöglicht. Diese Information über die effektiv auf die Fahrzeuge wirkenden Windgeschwindigkeiten können in einer Cloud bzw. in einem Backend gesammelt und ausgewertet werden. Die somit gesammelten und aufbereiteten Daten können dann anderen Fahrzeugen zur Verfügung gestellt werden. Somit ist die Erfindung geeignet, eine verbesserte Energieverbrauchs- und Reichweitenprognose bei Elektro- oder Hybridfahrzeugen zu ermöglichen. Darüber hinaus kann die Information über Windgeschwindigkeiten und insbesondere auch über Seitenwinde an Fahrerassistenzsysteme wie **z.B.** Spurhalteassistenten oder an autonome und teilautonome Fahrzeuge zur Verfügung gestellt werden und somit die Fahrsicherheit erhöhen.

Grundsätzlich ist das erfindungsgemäße Verfahren zur Ermittlung der effektiven Windgeschwindigkeit auch für verbrennungsmotorisch betriebene Fahrzeuge oder Hybridfahrzeuge denkbar. Besonders vorteilhaft ist die Anwendung allerdings bei Elektrofahrzeugen, da die wirkende Antriebsleistung besonders gut bestimmt werden kann. Die ermittelten Daten können für alle Arten von Kraftfahrzeugen nutzbringend verwendet werden.

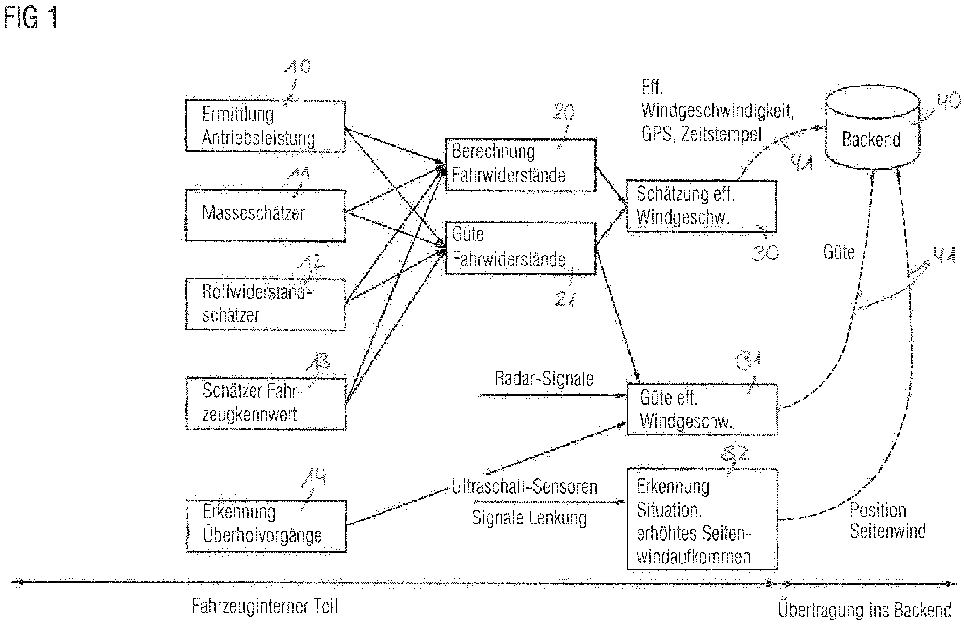

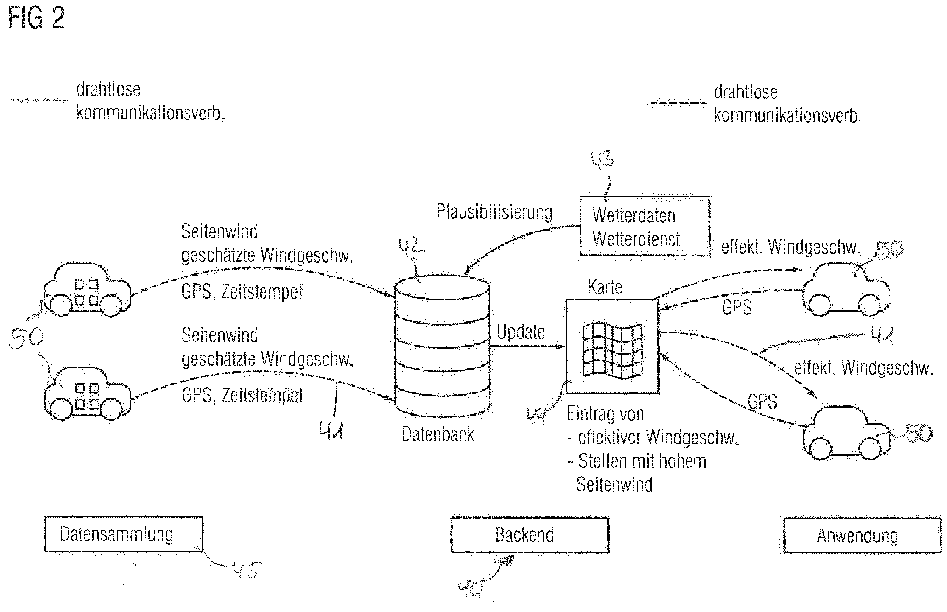

Im Folgenden soll die Erfindung anhand der Figuren 1 und 2 beispielhaft noch weiter erläutert werden.

Es zeigen schematisch:

Figur 1: eine Übersicht über die einzelnen Verfahrensschritte zur Ermittlung der effektiven Windgeschwindigkeit gemäß einer bevorzugten Ausführungsvariante der Erfindung; und

Figur 2: eine Übersicht über eine bevorzugte Anwendung der mit dem erfindungsgemäßen Verfahren ermittelten Windgeschwindigkeiten sowie der beteiligten Komponenten.

Figur 1 zeigt exemplarisch eine Übersicht über die Verfahrensschritte zur Ermittlung einer effektiven Windgeschwindigkeit am Beispiel eines Elektrofahrzeuges.

In Schritt 10 wird die Antriebsleistung des Fahrzeuges anhand von Signalen bezüglich der Längsdynamik des Fahrzeuges ermittelt. Insbesondere wird dabei die Antriebsleistung, welche durch die elektrische Maschine erbracht wird, anhand von Stromung und der Spannung in der elektrischen Maschine ermittelt. Diese Leistung wird vorzugsweise hinsichtlich der Verlustleistung im Antriebsstrang korrigiert.

Neben der Antriebsleistung des Fahrzeuges müssen die Fahrwiderstände ermittelt oder abgeschätzt werden (Schritt 20). Dafür wird in Schritt 11 die Fahrzeugmasse mit einem Masseschätzer anhand von Signalen der Längs- und Querdynamik, Geschwindigkeits- und Beschleunigungswerten geschätzt. Aus den genannten Signalen kann in Schritt 12 auch ein Rollwiderstand und in Schritt 13 ein Fahrzeugkennwert geschätzt werden. Zusätzlich können in Schritt 14 Überholvorgänge anhand von Signalen aus Lenkung, Fahrzeugpedalen, Blinker, Geschwindigkeits- und Beschleunigungswerten erkannt werden.

Die ermittelten oder geschätzten Werte zu Fahrzeugmasse, Rollwiderstand und Fahrzeugkennwert gehen in die Berechnung der Fahrwiderstände in Schritt 20 ein. Da die in den Schritten 11 bis 13 geschätzten Werte einer gewissen Unsicherheit unterliegen, sind auch die daraus berechneten Fahrwiderstände mit einem gewissen Fehler behaftet, bzw. weisen eine gewisse Güte 21 auf.

Anhand der in Schritt 10 ermittelten Antriebsleistung und den in Schritt 20 berechneten Fahrwiderständen kann nun in Schritt 30 die effektive Windgeschwindigkeit W in Fahrtrichtung bzw. entgegengesetzt geschätzt werden. Je nach Güte der Ausgangsdaten und Fahrwiderstände 21 weist auch die Schätzung der effektiven Windgeschwindigkeit 30 eine bestimmte Güte 31 auf. In die Güte der effektiven Windgeschwindigkeit fließen zusätzlich Informationen aus einem Radarsensor ein, ob ggf. ein vorausfahrendes Fahrzeug (z.B. ein LKW) erkannt wurde. Auch in Schritt 14 ggf. erfasste Überholvorgänge wirken sich auf die Güte 31 der geschätzten Windgeschwindigkeit aus und setzen diese herab. Zusätzlich können in Schritt 32 anhand von Ultraschall-Sensoren am Fahrzeug oder anhand von Lenkungssignalen Seitenwinde senkrecht zur Fahrtrichtung erkannt werden.

Die somit ermittelten Werte zur effektiven Windgeschwindigkeit und der Güte des ermittelten Wertes sowie evtl. erfasste Seitenwinde werden dann zusammen mit einer Geoposition (z.B. ermittelt über GPS, oder ein anderes Navigationssatellitensystem), und einer Zeitangabe/einem Zeitstempel per drahtloser Kommunikation 41 an ein Backend 40 gesendet.

Figur 2 zeigt die Datensammlung der effektiven Windgeschwindigkeiten (und ggf. Seitenwindgeschwindigkeiten) durch eine Mehrzahl an vernetzten Fahrzeugen 50.

Die mit dem oben beschriebenen Verfahren ermittelten Windgeschwindigkeiten werden über eine drahtlose Kommunikationsverbindung 41 an das Backend 40 gesendet. Dort werden die Daten zusammen mit den zugehörigen Ortsdaten in einer Datenbank 42 gespeichert. Mit einer Recheneinheit im Backend 40 werden die empfangenen und gespeicherten Daten mit statistischen Methoden oder Methoden der künstlichen Intelligenz ausgewertet. Insbesondere können Durchschnittswerte und wahrscheinlichste Werte ermittelt werden sowie Prognosen über zukünftige Windgeschwindigkeiten erstellt werden. Anhand von Wetterdaten 43, die von einem Wetterdienst empfangen werden, können die ausgewerteten Windgeschwindigkeiten plausibilisiert werden.

Die somit ermittelten und plausibilisierten Windgeschwindigkeiten (effektiver Wind und Seitenwind) werden dann in eine digitale Karte 44 eingetragen und können somit einem Straßennetz zugeordnet werden.

Wenn laufend neue Daten zu Windgeschwindigkeiten von vernetzten Fahrzeugen an das Backend gesendet werden, kann die Datenbank und insbesondere die digitale Karte laufend oder regelmäßig aktualisiert werden.

Die somit erhaltenen und in der digitalen Karte gespeicherten ortsbezogenen Informationen zu Windgeschwindigkeiten können dann wiederum anderen vernetzten Fahrzeugen 50 zur Verfügung gestellt werden. Diese können über einer drahtlose Kommunikation 41 eine Abfrage an das Backend bzw. einen digitalen Dienst senden, wobei in der Abfrage vorzugsweise eine Orts- oder Routeninformation enthalten ist. Anhand der empfangenen ortsbezogenen Abfrage kann dann vom Backend eine ortsbezogene Information zu den in der digitalen Karte gespeicherten Windgeschwindigkeiten an das vernetzte Fahrzeug 50 gesendet werden.

In den vernetzten Fahrzeugen 50 kann die somit empfangene Information über Windgeschwindigkeiten entlang der Route für verschiedene Funktionen verwendet werden. Beispiele für Funktionen sind Fahrerassistenzsysteme, Spurhalteassistenten, Warnungen an den Fahrer bezüglich der Windgeschwindigkeiten, Energieverbrauchsprognosen, Reichweitenprognosen, und andere.

Im Kontext der vorliegenden Erfindung soll GPS stellvertretend für sämtliche Globale Navigationssatellitensysteme (GNSS) steht, wie z.B. GPS, Galileo, GLONASS, Compass oder IRNSS. Eine Positionsbestimmung des Fahrzeugs kann darüber hinaus auch über eine Zellpositionierung erfolgen. Dies bietet sich insbesondere bei der Verwendung von GSM-, UMTS-, oder 4G-Netzen an.

**Patentansprüche**

1. Verfahren zur Prognose von Windgeschwindigkeiten,

   mit den Schritten:

   - Ermittlung (30) einer effektiven Windgeschwindigkeit ($W$), der jeweils ein Fahrzeug (50) während einer Fahrt ausgesetzt ist, für eine Mehrzahl von Fahrzeugen;
   - Übertragen der jeweils ermittelten effektiven Windgeschwindigkeit ($W$) über eine drahtlose Kommunikationsverbindung (41) aus der Mehrzahl von Fahrzeugen an ein Backend (40),
   - Sammeln von Daten zu den effektiven Windgeschwindigkeiten ($W$) welche anhand von von der Mehrzahl von Fahrzeugen erfassten Antriebsleistungen ermittelt wurden, im Backend (40) und Speichern dieser in einer Datenbank, dadurch **gekennzeichnet**, dass

   die effektive Windgeschwindigkeit ($W$), jeweils anhand einer während der Fahrt ermittelten, wirkenden Antriebsleistung ($P_m$) des Fahrzeugs (50) ermittelt wird, sowie durch den Schritt:

   - Auswerten der gespeicherten Daten zu den effektiven Windgeschwindigkeiten mit Hilfe von statistischen Methoden und/oder mit Verfahren der künstlichen Intelligenz, wobei das Auswerten der gesammelten Daten zu Windgeschwindigkeiten eine Prognose zukünftiger Windgeschwindigkeiten umfasst.

2. Verfahren zur Prognose von Windgeschwindigkeiten,

   mit den Schritten:

- Empfangen von Daten zu effektiven Windgeschwindigkeiten (*W*), denen jeweils ein Fahrzeug (50) während einer Fahrt ausgesetzt ist, für eine Mehrzahl von Fahrzeugen, in einem Backend (40); wobei die Daten zu effektiven Windgeschwindigkeiten (*W*) über eine drahtlose Kommunikationsverbindung (41) aus der Mehrzahl von Fahrzeugen an das Backend (40) übertragen werden;

- Sammeln der Daten zu den effektiven Windgeschwindigkeiten (*W*) welche anhand von von der Mehrzahl von Fahrzeugen erfassten Antriebsleistungen ermittelt wurden, im Backend (40) und Speichern dieser in einer Datenbank, dadurch**gekennzeichnet**, dass

die effektiven Windgeschwindigkeiten (*W*), jeweils anhand einer während der Fahrt ermittelten, wirkenden Antriebsleistung ($P_m$) des Fahrzeugs (50) ermittelt werden; sowie durch den Schritt:

- Auswerten der gespeicherten Daten zu den effektiven Windgeschwindigkeiten mit Hilfe von statistischen Methoden und/oder mit Verfahren der künstlichen Intelligenz, wobei das Auswerten der gesammelten Daten zu Windgeschwindigkeiten eine Prognose zukünftiger Windgeschwindigkeiten umfasst.

3. Verfahren gemäß Anspruch 1 oder 2, wobei ein Fahrzeug (50) aus der Mehrzahl an Fahrzeugen jeweils einen elektrischen Antriebsmotor aufweist, und die wirkende mechanische Antriebsleistung ($P_m$) während der Fahrt durch Messung von Strom und Spannung an dem das Fahrzeug antreibenden elektrischen Antriebsmotor bestimmt wird.

4. Verfahren gemäß einem der vorhergehenden Ansprüche, wobei die effektiv auf ein Fahrzeug aus der Mehrzahl an Fahrzeugen wirkende Windgeschwindigkeit (*W*) aus einem Luftwiderstand berechnet wird, welcher berechnet wird (20), indem aus der wirkenden Antriebsleistung (10), bekannte und/oder geschätzte Fahrwiederstände abgezogen werden.

5. Verfahren gemäß Anspruch 4, wobei zur Berechnung des Luftwiderstandes (20) Daten aus fahrzeuginterner Sensorik, Umfeldsensorik des Fahrzeuges, Positionsdaten des Fahrzeuges, Daten von digitalen Karten, Infrastrukturdaten, von anderen Fahrzeugen empfangene Daten und/oder aus einem Backend empfangene Daten verwendet werden.

6. Verfahren gemäß einem der vorhergehenden Ansprüche, wobei mittels Umfeldsensorik, fahrzeuginterner Sensorik und/oder Fahrzeug-zu-Fahrzeug Kommunikation Überholvorgänge und /oder vorausfahrende Fahrzeuge erkannt werden (14).

7. Verfahren gemäß einem der vorhergehenden Ansprüche, wobei anhand der verwendeten Daten eine Güte (31) des ermittelten Luftwiderstands (21) bzw. der ermittelten effektiven Windgeschwindigkeit (*W*) bestimmt wird.

**Claims**

1. Method for forecasting wind speeds,

comprising the following steps:

- determining (30) an effective wind speed (W) to which a respective vehicle (50) is exposed while driving, for a plurality of vehicles;
- transmitting the respectively determined effective wind speed (W) from the plurality of vehicles to a backend (40) via a wireless communication connection (41),
- collecting data in relation to the effective wind speeds (W) that have been determined on the basis of drive powers acquired from the plurality of vehicles in the backend (40) and storing them in a database, **characterized in that**

the effective wind speed *(W)* is determined in each case on the basis of an active drive power ($P_m$) of the vehicle (50) as determined while driving, and by the following step:

- evaluating the stored data in relation to the effective wind speeds with the aid of statistical methods and/or using artificial intelligence methods, wherein evaluating the collected data in relation to wind speeds comprises forecasting future wind speeds.

2. Method for forecasting wind speeds,

comprising the following steps:

- receiving data in relation to effective wind speeds *(W)* to which a respective vehicle (50) is exposed while driving, for a plurality of vehicles, in a backend (40);

wherein the data in relation to effective wind speeds *(W)* are transmitted from the plurality of vehicles to the backend (40) via a wireless communication connection (41);

- collecting the data in relation to the effective wind speeds (W) that have been determined on the basis of drive powers acquired from the plurality of vehicles in the backend (40) and storing them in a database, **characterized in that**

the effective wind speeds (W) are determined in each case on the basis of an active drive power ($P_m$) of the vehicle (50) as determined while driving;
and by the following step:

- evaluating the stored data in relation to the effective wind speeds with the aid of statistical methods and/or using artificial intelligence methods, wherein evaluating the collected data in relation to wind speeds comprises forecasting future wind speeds.

**3.** Method according to Claim 1 or 2, wherein a vehicle (50) from the plurality of vehicles in each case has an electric drive motor, and the active mechanical drive power ($P_m$) while driving is determined by measuring current and voltage on the electric drive motor driving the vehicle.

**4.** Method according to one of the preceding claims, wherein the wind speed (W) effectively acting on a vehicle from the plurality of vehicles is calculated from an air resistance, which is calculated (20) by subtracting known and/or estimated driving resistances from the active drive power (10).

**5.** Method according to Claim 4, wherein data from a sensor system internal to the vehicle, surroundings sensor system of the vehicle, position data of the vehicle, data from digital maps, infrastructure data, data received from other vehicles and/or data received from a backend are used to calculate the air resistance (20).

**6.** Method according to one of the preceding claims, wherein overtaking manoeuvres and/or vehicles driving in front are detected (14) by way of a surroundings sensor system, a sensor system internal to the vehicle and/or vehicle-to-vehicle communication.

**7.** Method according to one of the preceding claims, wherein a quality (31) of the determined air resistance (21) or of the determined effective wind speed *(W)* is determined on the basis of the data that are used.

**Revendications**

**1.** Procédé de prévision de la vitesse du vent,

comprenant les étapes suivantes :

- détermination (30) d'une vitesse de vent effective *(W),* à laquelle chaque véhicule (50) d'une pluralité de véhicules est exposé pendant un trajet ;
- transmission à un backend (40), par une liaison de communication sans fil (41), de la vitesse effective du vent (*W*) respective déterminée à partir de la pluralité de véhicules,
- collecte dans le backend (40) de données relatives aux vitesses effectives du vent (W) qui ont été déterminées à l'aide des puissances motrices enregistrées par la pluralité de véhicules, et stockage de celles-ci dans une base de données,

**caractérisé en ce que**
la vitesse effective du vent (*W*) est déterminée à chaque fois en utilisant une puissance motrice ($P_m$) effective du véhicule (50), déterminée pendant le trajet,
ainsi que par l'étape suivante :

- évaluer les données mémorisées relatives aux vitesses effectives du vent à l'aide de méthodes statistiques et/ou de procédés d'intelligence artificielle, l'évaluation des données collectées relatives aux vitesses du vent comprenant une prévision des vitesses futures du vent.

**2.** Procédé de prévision de la vitesse du vent,

comprenant les étapes suivantes :

- réception dans un backend (40) de données sur les vitesses effectives du vent (*W*) auxquelles est exposé un véhicule (50) pendant un trajet, pour une pluralité de véhicules respectifs ; les données sur les vitesses effectives du vent (*W*) étant transmises au backend (40) par la pluralité de véhicules, via une liaison de communication sans fil (41) ;
- collecte dans le backend (40) des données relatives aux vitesses effectives du vent *(W)* qui ont été déterminées à l'aide des puissances motrices détectées par la pluralité de véhicules et les stocker dans une base de données,

**caractérisé en ce que**
les vitesses effectives du vent (W) sont déterminées respectivement en utilisant une puissance motrice ($P_m$) effective du véhicule (50) déterminée pendant le trajet ; ainsi que par l'étape suivante :

- évaluer les données mémorisées relatives aux vitesses effectives du vent à l'aide de méthodes statistiques et/ou de procédés d'intelligence artificielle, l'évaluation des données collectées relatives aux vitesses du vent comprenant une prévision des vitesses futures du vent.

**3.** Procédé selon la revendication 1 ou la revendication 2,
dans lequel chaque véhicule (50) de la pluralité de véhicules présente un moteur d'entraînement électrique, et la puissance motrice mécanique effective ($P_m$) est déterminée pendant le déplacement par la mesure du courant et de la tension au niveau du moteur d'entraînement électrique entraînant le véhicule.

**4.** Procédé selon l'une des revendications précédentes, dans lequel la vitesse du vent (W) agissant effectivement sur un véhicule parmi la pluralité de véhicules est calculée à partir d'une résistance à l'air qui est calculée (20) en déduisant de la puissance motrice active (10), des résistances à l'avancement connues et/ou estimées.

**5.** Procédé selon la revendication 4, dans lequel on utilise pour le calcul de la résistance de l'air (20) des données provenant de capteurs internes au véhicule, de capteurs d'environnement du véhicule, de données de position du véhicule, de données de cartes numériques, de données d'infrastructure, de données reçues d'autres véhicules et/ou de données reçues d'un backend.

**6.** Procédé selon l'une des revendications précédentes, dans lequel des processus de dépassement et/ou des véhicules qui précèdent sont détectés (14) au moyen de capteurs d'environnement, de capteurs internes au véhicule et/ou d'une communication de véhicule à véhicule.

**7.** Procédé selon l'une des revendications précédentes, dans lequel une qualité (31) de la résistance de l'air (21) déterminée ou de la vitesse effective du vent (W) déterminée est déterminée en utilisant les données utilisées.

## FIG 1

**10** Ermittlung Antriebsleistung

**11** Masseschätzer

**12** Rollwiderstand-schätzer

**13** Schätzer Fahr-zeugkennwert

**14** Erkennung Überholvorgänge

**20** Berechnung Fahrwiderstände

**21** Güte Fahrwiderstände

**30** Schätzung eff. Windgeschw.

**31** Güte eff. Windgeschw.

**32** Erkennung Situation: erhöhtes Seiten-windaufkommen

**40** Backend

Radar-Signale

Ultraschall-Sensoren Signale Lenkung

Eff. Windgeschwindigkeit, GPS, Zeitstempel

Güte

Position Seitenwind

**41**

Fahrzeuginterner Teil

Übertragung ins Backend

EP 3 695 233 B1

# FIG 2

------- drahtlose
kommunikationsverb.

------- drahtlose
kommunikationsverb.

43

Plausibilisierung

Wetterdaten
Wetterdienst

Seitenwind
geschätzte Windgeschw.

effekt. Windgeschw. 50

42

GPS, Zeitstempel

Karte

GPS

Seitenwind
geschätzte Windgeschw.

Update

41

GPS, Zeitstempel

effekt. Windgeschw.

41

Datenbank

44

GPS

Eintrag von
- effektiver Windgeschw.
- Stellen mit hohem
  Seitenwind

50

| Datensammlung | Backend | Anwendung |

45

40

EP 3 695 233 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012001649 A1
- DE 102014211273 A1
- US 2013319096 A1
- WO 2014037986 A1

**In der Beschreibung aufgeführte Nicht-Patentliteratur**

- **QUELLE: VIEHL, A.** ; **CAKAR E** ; **ENGLER M** ; **KÖHLER. S**. Wetterdaten in der Reichweitenprognose für Elektrofahrzeuge. *ATZ 05/2016*, 28-34